(19) **Europäisches Patentamt**

**European Patent Office**

**Office européen des brevets**

(11) **EP 0 984 596 A1**

(12) **EUROPEAN PATENT APPLICATION**

(43) Date of publication:
08.03.2000 Bulletin 2000/10

(51) Int. Cl.⁷: **H04L 27/18**, H04L 1/12, H04L 7/02, H04L 7/033, H04L 27/26

(21) Application number: 98116645.7

(22) Date of filing: 03.09.1998

(84) Designated Contracting States:
**AT BE CH CY DE DK ES FI FR GB GR IE IT LI LU MC NL PT SE**
Designated Extension States:
**AL LT LV MK RO SI**

(71) Applicant:
**Sony International (Europe) GmbH**
**50829 Köln-Ossendorf (DE)**

(72) Inventors:
• **Böhnke, Ralf**
  **70736 Fellbach (DE)**
• **Konschak, Tino**
  **70736 Fellbach (DE)**
• **Dölle, Thomas**
  **70736 Fellbach (DE)**

(74) Representative:
**Rupp, Christian, Dipl.Phys. et al**
**Mitscherlich & Partner**
**Patent- und Rechtsanwälte**
**Sonnenstrasse 33**
**80331 München (DE)**

(54) **Adpative PSK system and timing offset compensation circuit**

(57) The present invention provides for an adaptive modulation capable of modulating data selectively according to a BPSK or a QPSK scheme, wherein the adaptive modulator 21 is designed such that the constellation points of the BPSK scheme are a subset of the constellation points of the QPSK scheme. The present invention furthermore relates to a demodulator for demodulating data in the cited manner and furthermore comprising a timing offset compensation unit 1, 2, 3. The invention proposes different implementations of a timing compensation unit which is independent of the actually used modulation scheme.

FIG 1

Notation: B0

**Description**

The present invention relates to an adaptive modulator capable of modulating data selectively according to a BPSK or a QPSK scheme, a method for adaptively modulating data, a demodulator as well as to a method for demodulating data.

The present invention generally relates to the technical field of wireless telecommunications. Particularly the present invention relates to wireless transmission systems capable of so-called link adaptation. Adapting the modulation scheme to the actual channel conditions is known as being an elegant way to optimize the transmission performance in a wireless transmission system. This adaptation of the modulation scheme, which is also known as link adaptation, uses different modulation schemes such as for example BPSK or QPSK depending on the channel SNR (signal to noise ratio) or the CIR (Carrier to interference ratio) to achieve for example the required bit error rate performance.

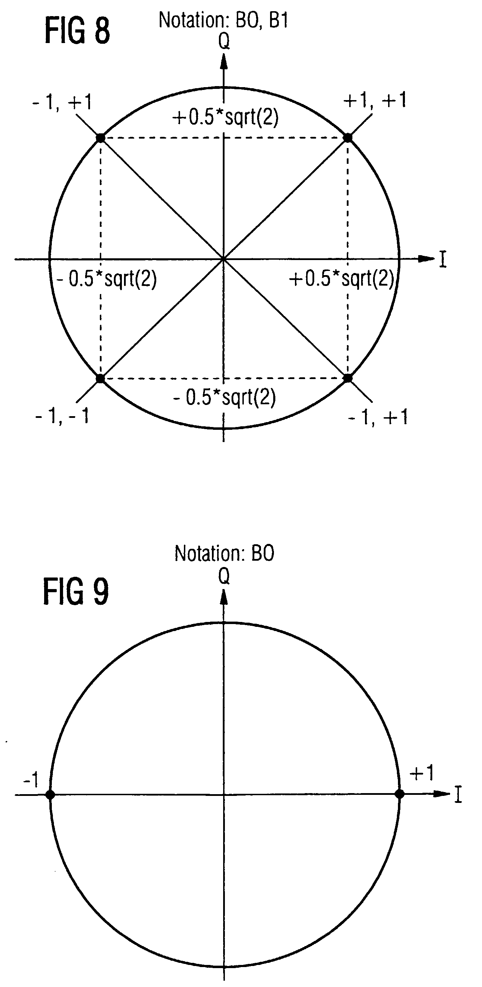

Figures 8 and 9 of the accompanying drawings show the modulation points constellation scheme which is used according to the state of the art when modulating according to a QPSK (Fig.8) and BPSK (Fig.9) scheme. As it can be seen from Fig. 8, the QPSK constellation points are mapped on the following positions:

+0,5SQRT(2)(1+i),
+0,5SQRT(2)(1-i),
-0,5SQRT(2)(1+i), and
-0,5SQRT(2)(1-i).

The BPSK constellation points are mapped on the following positions:

1+0 x i,
and
-1+0 x i.

According to the state of the art an adaptive modulation technique capable both of BPSK and QPSK modulation has to generate in total six different modulation constellation points, which enhances the complexity of the associated hardware and software components.

It is the object of the present invention to propose a modified BPSK/QPSK modulation scheme for an adaptive modulator/demodulator providing, for example, for advantages regarding a less complex structure of the adaptive modulator/demodulator. Furthermore, the combination with a timing offset detection/correction unit should be ameliorated.

It is a further object of the present invention to propose a technique for a timing offset detection and correction based on the modified BPSK constellation scheme.

The above objects are achieved by means of the features of the independent claims. The dependent claims develop further the idea of the present invention.

According to the present invention, therefore an adaptive modulator capable of modulating data selectively to a BPSK or a QPSK scheme is proposed. The adaptive modulator thereby is designed such that the constellation points of the BPSK scheme are a subset of the constellation points of the QPSK scheme. Therefore the number of necessary modulation constellation points can be effectively reduced to the minimum number of four different constellation points.

The adaptive modulator can comprise a selection control input to select the BPSK or the QPSK scheme depending on channel and/or traffic conditions such as for example the SNR of the channel.

The BPSK constellation points can be particularly set such as to coincide with the QPSK constellation points in the first and third quadrant of the plain defined by the real and imaginary axis.

According to the present invention, a wireless telecommunications device is provided comprising such an adaptive modulator.

According to the present invention furthermore a method for adaptively modulating data selectively according to a BPSK or a QPSK scheme is provided. The constellation points of the BPSK scheme thereby are selected such as to be a subset of the constellation points of the QPSK scheme.

The BPSK or the QPSK scheme is selected depending on channel and/or traffic conditions.

The BPSK constellation points are set such as to coincide with the QPSK constellation points in the first and third quadrant of the plain defined by the real and imaginary axis.

According to the present invention furthermore a demodulator for demodulating data modulated according to the above-cited method and furthermore comprising a timing offset compensation unit.

The timing offset compensation unit can comprise a QPSK hard decision unit deciding the closest possible QPSK constellation point of the received symbol.

The output of the timing offset compensation unit can be supplied to a soft decision unit deciding the constellation points of the received timing offset compensated symbols.

The demodulator can be particularly designed for OFDM modulated input signals.

The output of the QPSK hard decision unit can be supplied to a torsion detection unit of the timing offset compensation unit, wherein the torsion detection unit can comprise a summation circuit summing up all sampled symbols. Furthermore, the torsion detection unit comprises a dividing circuit dividing the output of the summation by the number N of sampled symbols of a unit as well as a normalizing circuit dividing the output of the dividing circuit by its absolute value.

In case the demodulator is designed for a coherent demodulation, it furthermore comprises a phase rotating unit rotating the phase of the input of the QPSK hard decision unit by PI/4.

According to the present invention, a wireless telecommunications device such as a mobile telephone comprising a demodulator as set forth above can be provided.

The present invention furthermore relates to a method for demodulating data.

In the following further objects, advantages and features of the present invention will come clearer from the explanation of different embodiments taken in conjunction with the figures of the accompanying drawings.

Fig. 1 shows a modified BPSK constellation scheme according to the present invention, wherein the BPSK constellation points are selected such as to be a subset of the QPSK constellation points,

Fig. 2 shows an adaptive modulator according to the present invention,

Fig. 3 shows a timing offset compensation unit for differential modulation according to the present invention,

Fig. 4 shows a timing offset compensation unit according to the present invention for coherent demodulation,

Fig. 5 shows a combination of a timing offset compensation unit with a blind modulation detection unit,

Fig. 6 shows the frequency domain differential modulation according to an OFDM transmission,

Fig. 7 shows the information blocks according to an OFDM transmission,

Fig. 8 shows a known QPSK modulation scheme, and

Fig. 9 shows a known BPSK modulation scheme.

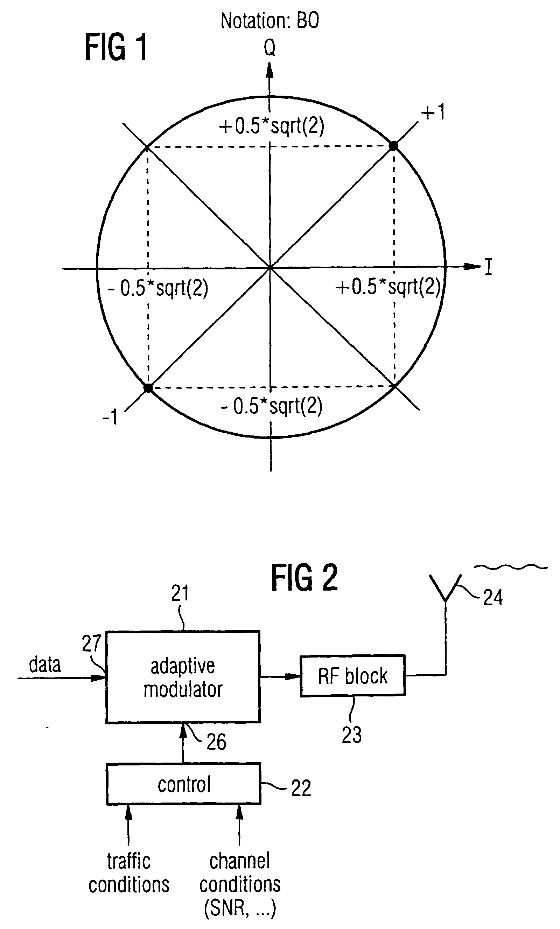

With reference to Fig. 1 a modified BPSK constellation scheme according to the present invention will be explained. As it can be seen from Fig.1 the QPSK constellation points remain the same as explained with reference to Fig. 8. However, according to the present invention, the BPSK constellation points are selected such as to be a subset of the QPSK constellation points. The BPSK constellation points are preferably mapped on the following positions:

+0,5SQRT(2)(1+i), and
-0,5SQRT(2)(1+i).

With other words, the BPSK constellation points are set such as to coincide to the QPSK constellation points in the first and third quadrant of the plain defined by the real and imaginary axis, i and Q, respectively.

The modified BPSK constellation scheme simplifies the structure of an adaptive modulator as the BPSK constellation points are now a subset of the QPSK constellation points, the OPSK constellation points remaining unchanged. Thus the related hardware and software components have only to cope with four different modulation constellation points.

Fig. 2 shows an adaptive modulator 21 according to the present invention. The adaptive modulator 21 can modulate the input data 27 selectively on, for example, a BPSK or a QPSK modulation scheme using the modified BPSK modulation scheme as shown in Fig. 1. The selection of one of the modulation schemes to be used by the adaptive modulator 21 is effected by means of a control input 26. A control unit 22 evaluates the modulation scheme to be used on the basis of supplied traffic conditions and channel conditions as, for example, the SNR (signal to noise ratio) of the channel.

Depending on the traffic conditions and the channel conditions the control unit 22 supplies a control signal to the control input 26 of the adaptive modulator 21 to select the modulation scheme to be used by the adaptive modulator 21. The correspondingly modulated data are then supplied to a RF block 23 and sent to the reception side by means of an antenna 24.

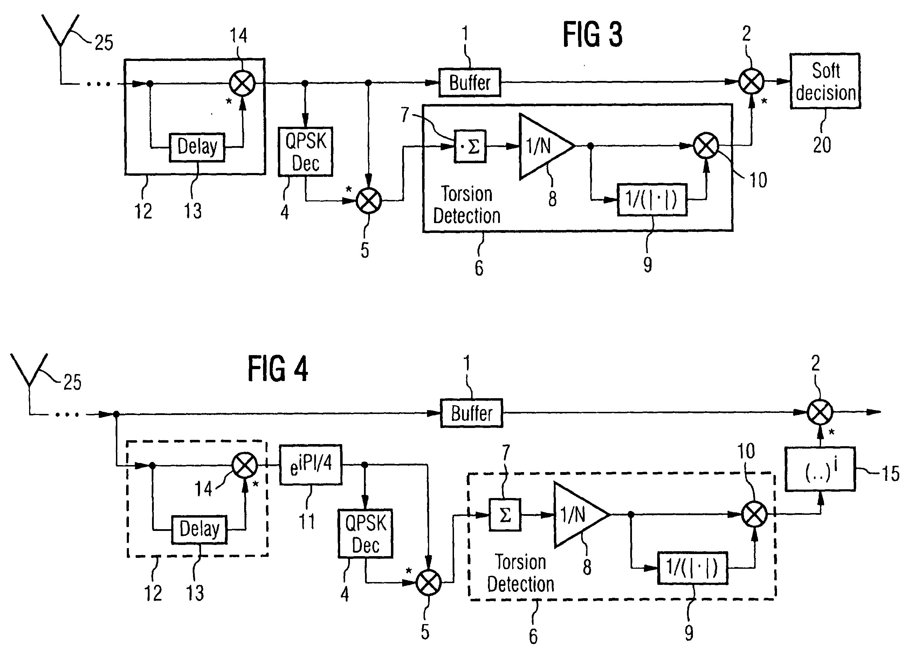

Fig. 3 shows partly a receiver receiving the signal transmitted from a transmitter as shown in Fig. 2 and received by means of an antenna 25. Fig.3 shows particularly a timing offset compensation unit for differential demodulation for demodulating both frequency domain differential QPSK and frequency domain differential modified BPSK modulated data. "Modified BPSK modulated data" thereby means data which are BPSK modulated according to the constellation points shown in figure 1.

This modified constellation diagram can be easily combined with a timing offset detection/compensation unit for an OFDM system. If a demodulation timing offset exists in an OFDM system, the received constellations on the subcarriers are rotating in the frequency domain.

The following equation describes the relationship between timing synchronization offset and constellation rotation:

$$\text{Phi} : ((2 \ast PI/N) \ast N_{Offset} \ast I$$

With N is the total number of samples per OFDM symbol (e.g.32), $N_{Offset}$ is the number of samples the time synchronization is misaligned and I is the subcarrier carrier index.

If differential encoding between subcarriers is used (Fig. 19) this continuous rotation is simplified to a constant phase rotation factor for the detected symbols.

In the case of subcarrier differential encoding this simplifies to: $Phi = ((2*PI/N)*N_{Offset}$

Fig. 3 shows the implementation of a timing offset compensation unit which is independent of the actually used modulation scheme. The received and down convened base band symbols are first passed through a differential detector 12 comprising a delay line 13 and a conjugate complex multiplier 14. The output of the differential detector 12 on the one hand is stored in a buffer 1. On the other hand the output from the differential detector 12 is given to a QPSK hard decision unit 4 deciding hard the closest possible QPSK constellation points. The output of the QPSK hard decision unit 4 is complex conjugated and multiplied with the original output data from the differential detector 12 and a multiplier 5. The output of the multiplier 5 is supplied to a torsion detection unit 6. The torsion detection unit 6 comprises a sigma circuit 7 summing up the values of all sampled symbols. The output of the sigma circuit 7 is then provided to a division circuit 8 dividing the output signal of the sigma circuit 7 by the number N of sampled symbols. The output of the division circuit 8 is then supplied to a normalizing circuit 9 taking the absolute value of the output signal of the dividing circuit 8 (amplifier) and finally the output signal of the dividing circuit 8 is divided by the absolute value output from the normalizing circuit 9 in a multiplier 10. The output signal of the torsion detection unit 6 is then complex conjugated and multiplied with the data from the buffer 1 in a multiplier 2 and then supplied, for example, to a soft decision circuit 20.

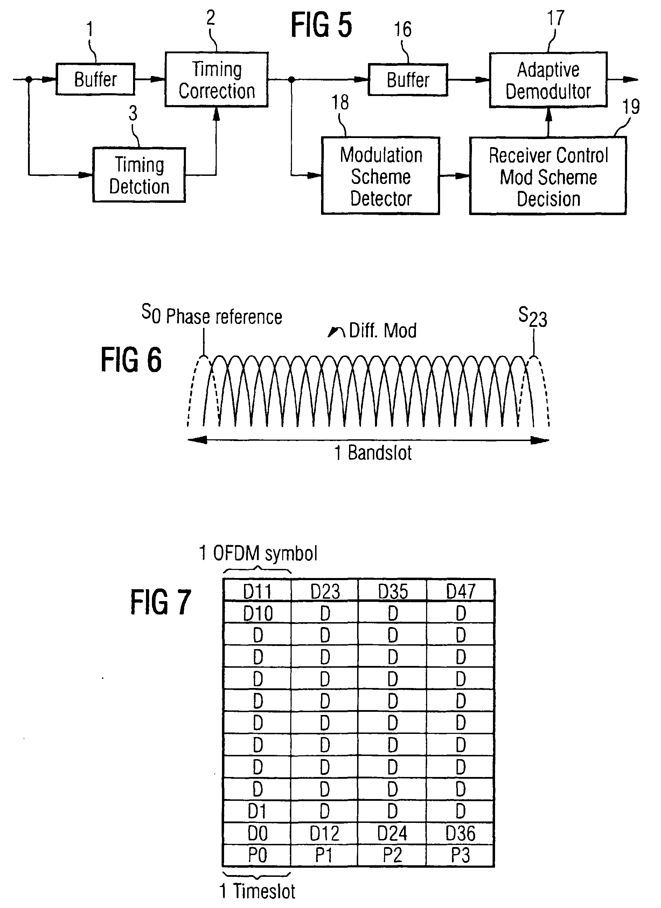

Fig. 4 shows a further embodiment of the present invention. Fig. 7 thereby shows the implementation of a timing offset compensation unit which is independent of the actual used modulation scheme, in this case a frequency domain coherent QPSK or a frequency domain coherent modified BPSK. In this case the down convened baseband data are supplied to a buffer 1 without passing through the differential detector 12. The output of the differential detector 12 is supplied to a phase rotating unit 11 rotating the phase of the output symbols of the differential detector 12 by PI/4. Furthermore, additionally to the elements as shown and explained with reference to Fig. 3 the output of the torsion detection unit 6 is given to the calculation unit 15 taking the i-th power of the output signal of the torsion detection unit 6, i being the subcarrier index as explained above). The output of the calculation unit 15 is supplied to the multiplier 2.

The timing offset compensation unit as shown in Fig. 3 and 4 can particularly be well combined with a blind modulation scheme detector detecting the actually used modulation scheme without signaling channel or overhead based on an statistical processing of the information symbol itself. Regarding the blind modulation scheme detector, reference is made on the European Patent Application filed on the same day as the present invention in the name of the same applicant and having the title "Blind modulation scheme detection".

As it is shown in Fig. 5 for the timing offset compensation in a demodulator the down converted baseband data are supplied on the one hand to a buffer 1 and on the other hand to a time detection circuitry 3 with the elements as shown in Fig.3 and 4, and then the output signal of the timing detection 3 is used for a timing correction in a unit 2. The result of the timing offset compensation is then demodulated according to a predetermined one of a plurality of types of modulation schemes. Therefore the output data of the timing offset compensation are stored temporarily in a buffer 16. A modulation scheme detector 18 issues indication signals indicating the type of modulation schemes used, wherein the detection in the modulation scheme detector 18 is based on a statistical processing of the information symbol itself. The indication signals output from the modulation scheme detector 18 are supplied to a receiver control modulation scheme decision unit 19 effecting a decision on the basis of the indication signals by comparison procedures on the basis of indication signals supplied by the modulation scheme detector 18 and/or threshold values. As a result of the decision effected by the receiver control modulation scheme decision unit 19 a control signal is output to the adaptive demodulator 17 such that the adaptive demodulator uses the correct demodulation scheme for the demodulation of the data stored in the buffer stored 16.

The concept of the present invention as explained above is particularly advantageous in combination with OFDM modulation.

Fig. 6 and 7 show details of an OFDM modulation.

Particularly Fig. 6 shows a frequency domain differential modulation scheme and Fig. 7 shows information blocks according to an OFDM transmission. It is assumed the case of an OFDM transmission where one subcarrier carries one information symbol. The data is differentially modulated between adjacent subcarriers. If multiple OFDM symbols belong to the same information unit, the symbols are transmitted in adjacent time slots. The differential modulation between adjacent subcarriers and transmission of symbols on the adjacent time slots exploits the benefits of the high channel correlation (coherence bandwidth and coherence time).

Fig. 7 particularly shows the usage of several adjacent OFDM symbols as information transmission block.

## Claims

1. Adaptive modulator capable of modulating data selectively according to a BPSK or a QPSK scheme,
   characterized in that
   the adaptive modulator (21) is designed such that the constellation points of the BPSK scheme are a subset of the constellation points of the QPSK scheme.

2. Adaptive modulator according to claims 1, characterized in that
it comprises a selection control input (26) to select the BPSK or the QPSK scheme depending on channel and/or traffic conditions.

3. Adaptive modulator according to anyone of the preceding claims,
characterized in that
the BPSK constellation points are set such as to coincide with the QPSK constellation points in the first and third quadrant of the plane defined by the real and imaginary axes.

4. Wireless telecommunications device,
characterized in that
it comprises an adaptive modulator according to anyone of the preceding claims.

5. Method for adaptively modulating data selectively according to a BPSK or a QPSK scheme,
characterized in that
the constellation points of the BPSK scheme are a subset of the constellation points of the QPSK scheme.

6. Method according to claim 5
characterized in that
the BPSK or the QPSK scheme is selected (26) depending on channel and/or traffic conditions.

7. Method according to claim 5 or 6,
characterized in that
the BPSK constellation points are set such as to coincide with the QPSK constellation points in the first and third quadrant of the plane defined by the real and imaginary axes.

8. Demodulator for demodulating data according to anyone of claims 4 to 6, comprising a timing offset compensation unit (1, 2, 3).

9. Demodulator according to claim 8,
characterized in that
the timing offset compensation unit (1, 2, 3) comprises a QPSK hard decision unit (4) deciding the closest possible QPSK constellation point of the received symbol.

10. Demodulator according to claim 8 or 9,
characterized in that
the output of the timing offset compensation unit (1, 2, 3) is supplied to a soft decision unit (20) deciding the constellation points of the received timing offset compensated symbols.

11. Demodulator according to anyone of claims 8 to 10,
characterized in that

it is designed for OFDM modulated input signals.

12. Demodulator according to anyone of claims 8 to 11,
characterized in that
the output of the QPSK hard decision unit (4) is supplied to a torsion detection unit (6) of the timing offset compensation unit (1, 2, 3), wherein the torsion detection unit (6) comprises:

- a summation circuit (7) summing up all sampled symbols of a data unit,
- a dividing circuit (8) dividing the output of the summation by the number N of sampled symbols of a data unit, and
- a normalizing circuit (9) dividing the output of the dividing circuit by its absolute value.

13. Demodulator according to claim 12,
characterized in that
it is designed for coherent demodulation and it furthermore comprises:

- a phase rotating unit (11) rotating the phase of the input of the QPSK hard decision unit by PI/4.

14. Wireless telecommunications device,
characterized in that
it is a mobile telephone comprising a demodulator according to anyone of claims 8 to 13.

15. Method for demodulating data modulated according to anyone of claims 5 to 7, comprising the step of timing offset compensating (1, 2, 3) a received modulated signal.

16. Method for demodulating according to claim 15,
characterized in that
the timing offset compensation (1, 2, 3) comprises a QPSK hard decision step (4) for deciding the closest possible QPSK constellation point of the received symbol.

17. Method for demodulating according to claim 15 or 16,
characterized by
the step of soft deciding (20) the constellation points of the output symbols of the timing offset compensation step (1, 2, 3).

18. Method for demodulating according to anyone of claims 15 to 17,
characterized in that
OFDM modulated input signals are demodulated.

19. Method for demodulating according to anyone of claims 15 to 18,
characterized in that

the result of the QPSK hard decision step (4) is used for a torsion detection step (6), wherein the torsion detection step (6) comprises the steps of:

- summing up (7) all sampled symbols of a data unit,
- dividing (8) the output of the summation (7) by the number N of sampled symbols of a data unit of the received signal, and
- normalizing/dividing (9) the result of the dividing step (8) by its absolute value.

20. Method for demodulating according to claim 18, characterized in that
it is a coherent demodulation and it furthermore comprises the step of:

- phase rotating (11) the phase of the input of the QPSK hard decision step (4) by PI/4.

Notation: B0

## FIG 1

## FIG 2

7

FIG 3

FIG 4

## FIG 5

```
┌────────┐   ┌──────────┐        ┌────────┐   ┌──────────┐
│ Buffer │──▶│  Timing  │───────▶│ Buffer │──▶│ Adaptive │───▶
│   1    │   │Correction│   ┌──▶ │   16   │   │Demodultor│
└────────┘   │    2     │   │    └────────┘   │    17    │
    │        └──────────┘   │                 └──────────┘
    │             ▲         │                       ▲
    │             │         │                       │
    │        ┌─────────┐    │   ┌──────────┐  ┌──────────────┐
    └───────▶│ Timing  │    └──▶│Modulation│─▶│Receiver Control│
             │ Detction│        │ Scheme   │  │ Mod Scheme   │
             │    3    │        │ Detector │  │  Decision    │
             └─────────┘        │   18     │  │     19       │
                                └──────────┘  └──────────────┘
```

## FIG 6

S₀ Phase reference        ⌢ Diff. Mod        S₂₃

|←――――――――――― 1 Bandslot ―――――――――――→|

## FIG 7

1 OFDM symbol

| D11 | D23 | D35 | D47 |
|-----|-----|-----|-----|
| D10 | D   | D   | D   |
| D   | D   | D   | D   |
| D   | D   | D   | D   |
| D   | D   | D   | D   |
| D   | D   | D   | D   |
| D   | D   | D   | D   |
| D   | D   | D   | D   |
| D   | D   | D   | D   |
| D   | D   | D   | D   |
| D1  | D   | D   | D   |
| D0  | D12 | D24 | D36 |
| P0  | P1  | P2  | P3  |

1 Timeslot

## FIG 8

Notation: B0, B1

## FIG 9

Notation: B0

**European Patent Office**

## EUROPEAN SEARCH REPORT

Application Number

EP 98 11 6645

### DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | SODHA J: "Shape codes in a 3D signal constellation" GATEWAY TO THE TWENTY FIRST CENTURY. INTERNATIONAL CONFERENCE ON UNIVERSAL PERSONAL COMMUNICATIONS. 1996 5TH IEEE INTERNATIONAL CONFERENCE ON UNIVERSAL PERSONAL COMMUNICATIONS RECORD (CAT. NO.96TH8185), PROCEEDINGS OF ICUPC - 5TH INTERNATIONAL CONFER, pages 533-537 vol.2, XP002092058 ISBN 0-7803-3300-4, 1996, New York, NY, USA, IEEE, USA * figures 2,4 * * page 535, last paragraph - page 536, paragraph 1 * * table 4 * | 1-7 | H04L27/18 H04L1/12 H04L7/02 H04L7/033 H04L27/26 |
| X Y | WO 92 22162 A (BRITISH TELECOMM) 10 December 1992 (1992-12-10) * figure 2 * * abstract * | 1,2,4-6 8-12, 14-19 | |
| | | | **TECHNICAL FIELDS SEARCHED** |
| | | | H04L |
| X | WEBB W T: "QAM: THE MODULATION SCHEME FOR FUTURE MOBILE RADIO COMMUNICATIONS?" ELECTRONICS AND COMMUNICATION ENGINEERING JOURNAL, UK, vol. 4, no. 4, 1 August 1992 (1992-08-01), pages 167-176, XP000307895 ISSN 0954-0695 * figure 9 * | 1,2,4-6 | |

-/--

The present search report has been drawn up for all claims

| Place of search | Date of completion of the search | Examiner |
|---|---|---|
| THE HAGUE | 6 September 1999 | Langinieux, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 98 11 6645

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| Y | FR 2 721 778 A (FRANCE TELECOM ;TELEDIFFUSION FSE) 29 December 1995 (1995-12-29) | 8-12, 14-19 | |
| A | * abstract * * page 1, line 4 - line 6 * * page 2, line 26 - page 3, line 13 * * page 3, line 31 - page 4, line 9 * * page 5, line 22 - line 29 * * page 6, line 21 - line 28 * * page 9, line 26 * * page 10, line 3 - line 6 * * page 10, line 19 - page 11, line 8 * * figures 1-3,6 * | 13,20 | |
| A | EP 0 683 576 A (HITACHI LTD) 22 November 1995 (1995-11-22) * abstract * * page 11, line 17 - page 13, line 10 * * figure 6 * | 8-20 | |
| A | US 5 255 290 A (ANVARI KIOMARS) 19 October 1993 (1993-10-19) * abstract * * column 3, line 1 - line 6 * * column 3, line 42 * * column 4, line 28 - column 4, line 68 * * column 5, line 25 - line 53 * * figures 1,2 * | 8-20 | **TECHNICAL FIELDS SEARCHED** |

The present search report has been drawn up for all claims

| Place of search | Date of completion of the search | Examiner |
|---|---|---|
| THE HAGUE | 6 September 1999 | Langinieux, F |

European Patent
Office

Application Number

EP 98 11 6645

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

13

**European Patent Office**

**LACK OF UNITY OF INVENTION
SHEET B**

Application Number

EP 98 11 6645

The Search Division considers that the present European patent application does not comply with the requirements of unity of invention and relates to several inventions or groups of inventions, namely:

1. Claims: 1-7

   Modulator and method for selecting a modulation scheme (BPSK or QPSK)depending on channel or traffic quality. Introduces a modified BPSK constellation scheme, in which the BPSK constellation is a subset of the QPSK constellation, and furthermore, the BPSK constellation points coincide with the two QPSK constellation points in the first and third quadrant.

2. Claims: 8-20

   Demodulator and method comprising a timing offset compensation unit, which itself comprises a torsion detection/correction unit based on summation, division and normalisation circuits.

## ANNEX TO THE EUROPEAN SEARCH REPORT
## ON EUROPEAN PATENT APPLICATION NO.

EP 98 11 6645

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-1999

| Patent document cited in search report | | Publication date | Patent family member(s) | | Publication date |
|---|---|---|---|---|---|
| WO 9222162 | A | 10-12-1992 | AT | 162035 T | 15-01-1998 |
| | | | AU | 656972 B | 23-02-1995 |
| | | | AU | 1772492 A | 08-01-1993 |
| | | | CA | 2110578 A | 10-12-1992 |
| | | | DE | 69223961 D | 12-02-1998 |
| | | | DE | 69223961 T | 30-07-1998 |
| | | | EP | 0587620 A | 23-03-1994 |
| | | | ES | 2112318 T | 01-04-1998 |
| | | | JP | 6507763 T | 01-09-1994 |
| | | | SG | 47627 A | 17-04-1998 |
| | | | US | 5828695 A | 27-10-1998 |
| FR 2721778 | A | 29-12-1995 | EP | 0767996 A | 16-04-1997 |
| | | | WO | 9600472 A | 04-01-1996 |
| EP 0683576 | A | 22-11-1995 | JP | 7321763 A | 08-12-1995 |
| US 5255290 | A | 19-10-1993 | NONE | | |